# EUROPÄISCHE PATENTSCHRIFT

(11) **EP 0 671 796 B1**
(45) Veröffentlichungstag und Bekanntmachung des Hinweises auf die Patenterteilung: **08.01.1997**
(21) Anmeldenummer: 94103649.3
(22) Anmeldetag: 10.03.1994
(51) Int. Cl.: H02G 1/06

(54) **Vorrichtung zum Verlegen von Kabeln**
Cable laying device
Dispositif de pose de câbles

(43) Veröffentlichungstag der Anmeldung: 13.09.1995
(73) Patentinhaber: Cielker, Werner, D-54587 Birgel (DE)
(72) Erfinder: Cielker, Werner, D-54587 Birgel (DE)
(74) Vertreter: Köhne, Friedrich, Dipl.-Ing.

(56) Entgegenhaltungen:
- EP-A- 0 065 470

## Beschreibung

Die Erfindung bezieht sich auf eine Vorrichtung zum Verlegen von Kabeln in nach oben offene Kabelgräben, mit den Merkmalen des Oberbegriffs des Anspruchs 1.

Vorrichtungen der vorgenannten Gattung, die in der Fachwelt auch als Erdkabelrollen bezeichnet werden, sind in der Praxis in verschiedenen konstruktiven Ausführungen bekannt. Übereinstimmend bei allen Ausführungen ist ein Gestell, das im Kabelgraben auf dessen Boden aufgestellt wird. In dem Gestell ist eine feststehende Achse befestigt, auf welcher eine Rolle bzw. Laufrolle quer zum Kabelgraben drehbar gelagert ist. Derartige Vorrichtungen, auch Kabelverlegegeräte genannt, sind dann in größerer Anzahl in dem Kabelgraben aufgestellt. Der Abstand der Vorrichtungen voneinander hängt im wesentlichen vom Verlauf des Kabelgrabens und von der Dicke bzw. Stabilität des zu verlegenden Kabels ab. Das Kabel wird dann von oben auf die Laufrollen aufgelegt und so zunächst über die Länge des Kabelgrabens gezogen. Um das Kabel auf den Boden des Kabelgrabens einbringen zu können, muß jede Vorrichtung nach einer Seite des Kabelgrabens gekippt werden, daß das Kabel von der Laufrolle abrutschen kann. Wenn man bedenkt, daß die Kabelgräben und die einzulegenden Kabel meist mehrere hundert Meter bis hin zu zwei Kilometer lang sind, bringt das Kippen der zahlreichen Vorrichtungen einen erheblichen Arbeitsaufwand mit sich, zumal im allgemeinen mehrere Kabel nacheinander in den Kabelgraben eingebracht werden müssen. Außerdem besteht die Gefahr, daß die Kabel während des Einziehens seitlich von den Rollen abrutschen.

Beispielsweise ist aus der EP 0 065 470 A1 eine Vorrichtung zum Verlegen von Kabeln in nach oben offene Kabelgräben bekannt. Diese Vorrichtung besteht aus zwei parallel angeordneten, im wesentlichen U-förmig ausgebildeten Bügeln, zwischen denen ein im wesentlichen ringförmig ausgebildetes Führungselement für das Kabel angeordnet ist. Das Führungselement besteht aus einem einseitig offenen Ringabschnitt, an dessen Öffnung eine drehbar gelagerte Rolle zur Aufnahme und zum Transport des Kabels angeordnet ist, wobei die Rolle mit ihrem einen Ende an dem ringförmigen Abschnitt gehalten ist und ihr zweites Ende mittels einer Schneliverriegelung an diesem ringförmigen Abschnitt befestigt ist, so daß das aufliegende Kabel nach Öffnen der Schnellverriegelung unter der Schwerkraft in den Kabeigraben fallen kann. Eine derartige Vorrichtung hat jedoch den Nachteil, daß insbesondere bei dem Verlegen von langen und damit ein sehr hohes Gewicht aufweisenden Kabeln eine große Reibung zwischen dem Kabel und dem ringförmigen Abschnitt entsteht, was insbesondere dann verstärkt wird, wenn das Kabel in solchen Kabelgräben verlegt werden soll, die zumindest teilweise in Kurven ausgebildet sind. Ferner wird der Reibwiderstand durch Verschmutzungen im Bereich des ringförmigen Abschnitts oder auf der Mantelfläche des Kabels erhöht. Hierdurch besteht die nicht unerhebliche Gefahr, daß die Mantelfläche eines Kabels beschädigt wird.

Der Erfindung liegt demgemäß die Aufgabe zu Grunde, eine Vorrichtung zu schaffen, die einfach gehandhabt werden kann und wodurch das Einbringen des Kabels in den Kabelgraben wesentlich erleichtert wird.

Die gestellte Aufgabe wird erfindungsgemäß durch die Merkmale des Kennzeichens des Anspruchs 1 gelöst.

Vorteilhafte Ausgestaltungen der erfindungsgemäßen Vorrichtung ergeben sich aus den Unteransprüchen.

In der Zeichnung sind Ausführungsbeispiele der Erfindung im Schema dargestellt, und zwar zeigen
- Fig. 1: eine Draufsicht auf ein Teilstück eines Kabelgrabens mit mehreren darin aufgestellten Vorrichtungen,
- Fig. 2: einen Vertikalschnitt durch den Kabelgraben gemäß Schnittlinie II-II in Fig. 1 mit Seitenansicht auf eine Vorrichtung,
- Fig. 3: eine perspektivische Ansicht einer Vorrichtung in Betriebsstellung,
- Fig. 4: eine Seitenansicht auf die Vorrichtung gemäß Fig. 3,
- Fig. 5: eine Stirnansicht in Richtung des Pfeiles V in Fig. 3,
- Fig. 6: eine Draufsicht auf die Vorrichtung gemäß Fig. 3,
- Fig. 7: eine perspektivische Ansicht entsprechend Fig. 3, jedoch mit weiteren Ausgestaltungen,
- Fig. 8: eine Draufsicht auf die Vorrichtung gemäß Fig. 7 in Betriebsstellung,
- Fig. 9: eine Draufsicht auf die Vorrichtung gemäß Fig. 8, jedoch in zusammengeklappter Transportstellung,
- Fig. 10: eine Seitenansicht gemäß Linie X-X in Fig. 8,
- Fig. 11: eine Seitenansicht zu Fig. 7, jedoch mit Darstellung weiterer Details,
- Fig. 12: einen Teilvertikalschnitt gemäß Schnittlinie XII-XII in Fig. 11 und
- Fig. 13: einen Teilschnitt gemäß Schnittlinie XIII-XIII.

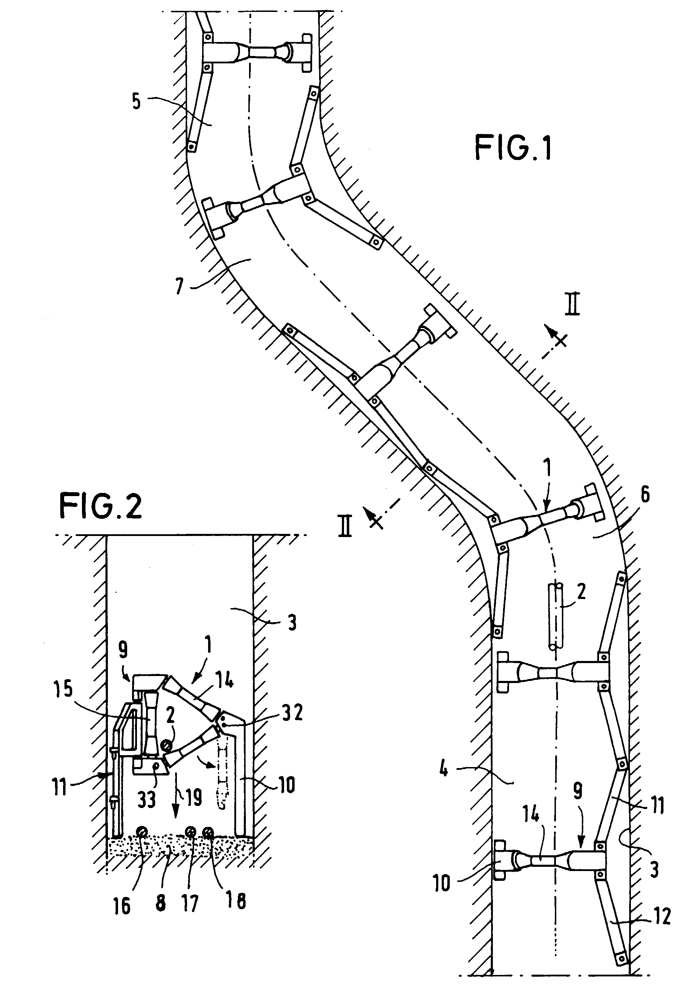

Die Fig. 1 und 2 veranschaulichen das Prinzip der Verlegung eines Kabels 2 in einen Kabelgraben 3, wobei in dem Kabelgraben und zwar auf dessen Boden eine Anzahl von erfindungsgemäßen Vorrichtungen 1 bzw. Kabelverlegegeräte mit Abstand voneinander aufgestellt sind. In diesem Ausführungsbeispiel hat der Kabelgraben geradlinige Bereiche 4 und 5 sowie gebogene Bereiche 6 und 7. Auf dem Boden des Kabelgrabens befinden sich übliche Kabelauflagen 8, beispielsweise ein Sandbett von etwa 10 bis 20 cm Dicke. Die verlegten Kabel 16, 17, 18 usw. können mit aufliegenden Trassenwarnbändern gekennzeichnet werden. In einem solchen Kabelgraben können mehrere Kabel 16, 17 und 18 nebeneinander und gegebenenfalls auch übereinander verlegt werden.

Fig. 2 zeigt den prinzipiellen Aufbau und die Wirkungsweise der erfindungsgemäßen Vorrichtung. Danach ist eine untere Rolle 13 an dem einen Ende, nämlich an dem rechten Ende an einem Gestell 9 gehalten, welches nachfolgend noch näher erläutert ist. Das andere Ende der Rolle 13, nämlich das linke Ende, ist mittels einer Schnellverriegelung 33 derart mit dem Gestell 9 verbunden, daß das aufliegende Kabel 2 nach Öffnen der Schnellverriegelung 33 unter der Schwerkraft in Richtung des Pfeiles 19 in den Kabelgraben 3 herabfallen kann. Für die Halterung des rechten Endes der Rolle 13 sowie für die Schnellverriegelung 33 können verschiedene Konstruktionsdetails gewählt werden, wichtig ist in jedem Fall, daß das Kabel 2 nach öffnen der Schnellverriegelung nach unten ungehindert herabfallen kann, ohne daß die Vorrichtung 1 als solche bewegt werden muß. Als vorteilhaft hat sich jedoch erwiesen, daß das eine Ende der Rolle in einem Schwenklager mit einem waagerechten Schwenkbolzen 32 gehalten ist, so daß die Rolle 13 nach Öffnen der Schnellverriegelung 33 in die strichpunktiert gezeichnete vertikale Stellung ausschwenken kann und das Gestell 9 nach unten hin geöffnet ist.

Gemäß weiteren vorteilhaften Ausgestaltungen der erfindungsgemäßen Vorrichtung ist neben dem einen Ende der Rolle 13 im Bereich der Schnellverriegelung 33 eine weitere Rolle 15 mit einer vertikalen feststehenden Drehachse angeordnet. Desweiteren ist eine dritte Rolle 14 mit einer feststehenden Drehachse derart angeordnet, daß die drei Rollen 13, 14, 15, wie aus Fig. 2 ersichtlich ist, miteinander ein gleichschenkliges Dreieck bilden, d. h. die drei Rollen haben, allein schon aus Fertigungsgründen, gleiche Länge und gleiche konstruktive Ausbildung. Bei dieser Anordnung der drei Rollen ist die untere Rolle 13 in Betriebsstellung nach der Schnellverriegelung 33 hin entsprechend geneigt. Diese Anordnungsweise der Rollen hat mehrere Vorteile. Zum einen wird das Kabel 2 während des Hindurchziehens durch die Vorrichtung oberflächenmäßig geschont, weil es in zwei Oberflächenbereichen an den beiden benachbarten Enden der Rollen 13 und 15 geführt ist. Zum anderen wandert das Kabel 2 während des Hindurchziehens nicht seitlich hin und her über die Breite der Rolle 13, was sich verschleißmindernd auswirkt. Selbst wenn das Kabel 2 seitlichen Kräften ausgesetzt ist, z. B. beim Verlegen in Bögen des Kabelgrabens, so ist das Kabel durch die drei Rollen 13, 14 und 15 allseitig gehalten, so daß es nicht von der Vorrichtung abrutschen oder abspringen kann.

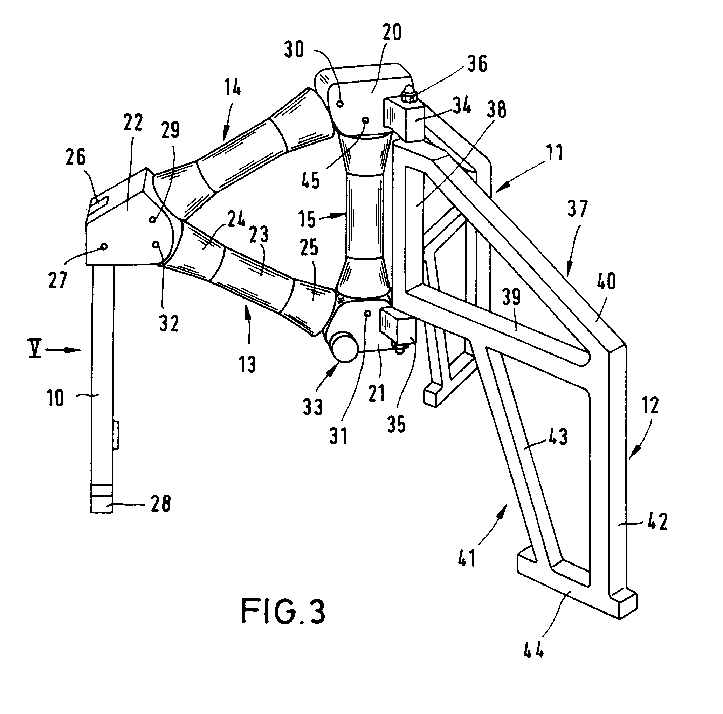

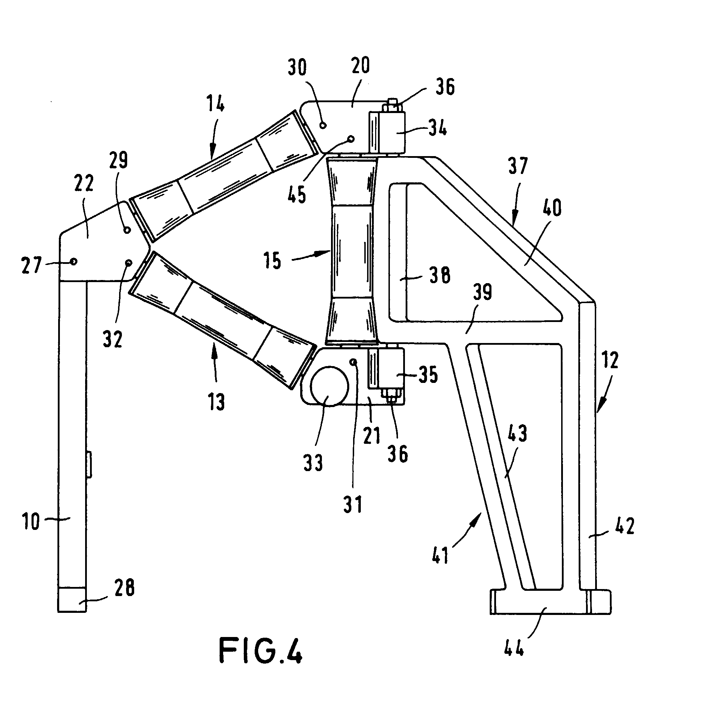

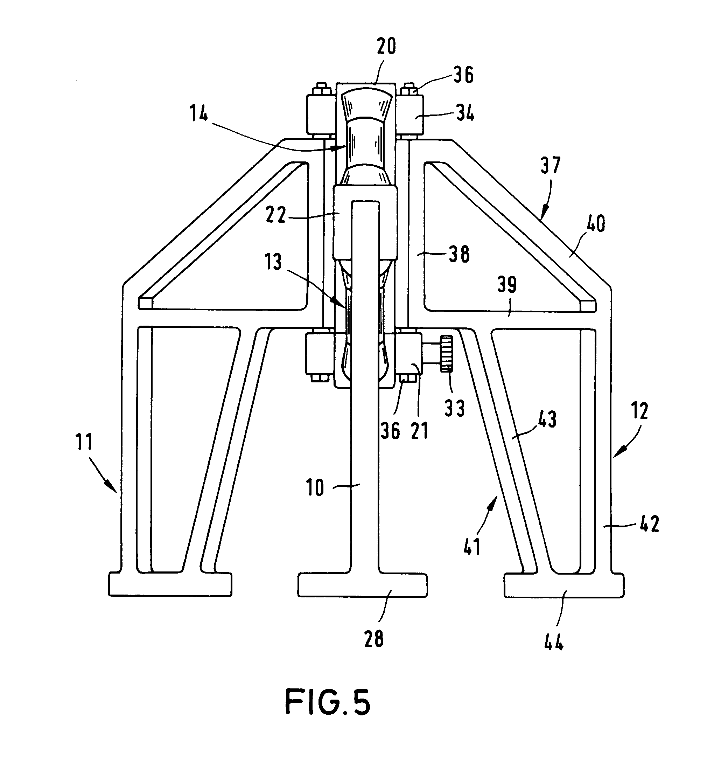

Das Gestell 9 weist drei nachfolgend noch näher erläuterte Stützen 10, 11 und 12 auf, die mit den Rollenlagerungen verbunden sind. Die Art der Verbindung ist im einzelnen aus den Fig. 3 bis 6 ersichtlich. Dabei ist die untere Rolle 13 einerseits über die Schnellverriegelung 33 mit einem Verriegelungsstück 21 und andererseits mittels des Schwenkbolzens 32 mit einem Verbindungsstück 22 verbunden. Die vertikale Rolle 15 ist mittels Festbolzen 31 einerseits mit dem Verriegelungsstück 21 und andererseits mittels Festbolzen 45 mit einem Kopfstück 20 verbunden. Die dritte Rolle 14 ist ebenfalls mittels beiderseitiger Festbolzen 29 und 30 mit dem Verbindungsstück 22 und dem Kopfstück 20 verbunden. Es versteht sich, daß die besagten Festbolzen 29, 30, 31 und 45 sowie der Schwenkbolzen 32 nicht unmittelbar an den Rollen 13, 14 und 15 angreifen, sondern an feststehenden Achsen, auf denen die Rollen frei drehbar gelagert sind. Vorteilhafterweise sind die Rollen 13, 14 und 15 unter Zwischenschaltung staub- und schmutzgeschützter Kugellager auf diesen Achsen oder entsprechenden beiderseitigen Achsstutzen gelagert. Wie die Zeichnung verdeutlicht, weisen die Rollen 13, 14 und 15 ein mittleres zylindrisches Teil 23 und zwei seitliche konische Teile 24 und 25 auf, wobei sich die konischen Teile 24 und 25 nach außen hin erweitern. Die Rollen mit den drei Rollenteilen können aus einem einzigen Stück bestehen. Eine alternative Konstruktion ist dadurch gegeben, daß die drei Rollenteile voneinander getrennt sind, so daß sie sich einzeln frei drehen können. Je nach den gegebenen Verhältnissen können auch andere Rollenformen gewählt werden.

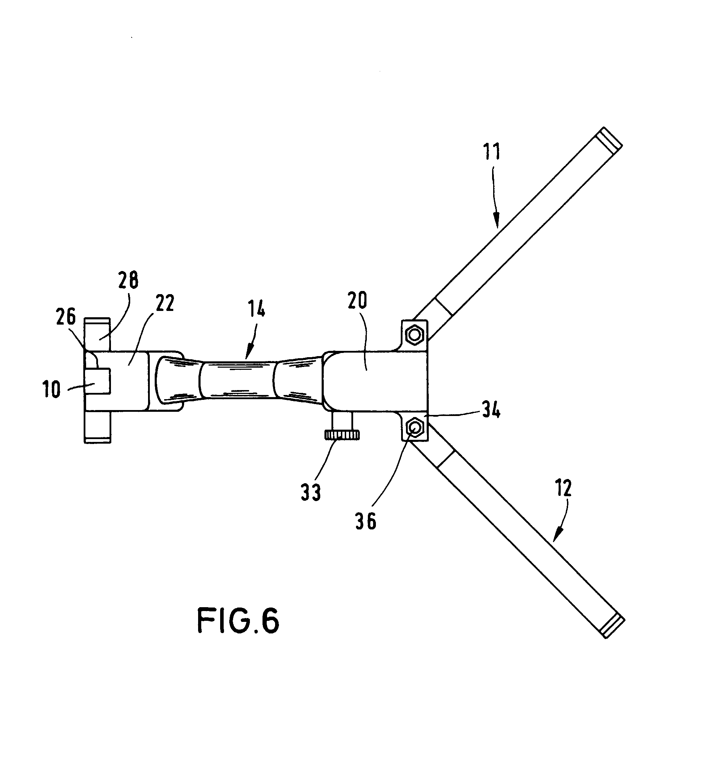

Bei dem Ausführungsbeispiel nach den Fig. 3 bis 6 ist die eine Stütze 10 am oberen Ende in einem vertikalen Schlitz 26 des Verbindungsstückes 22 mittels eines quer verlaufenden Bolzens 27 befestigt. Zur besseren Auflage besitzt die Stütze 10 einen verbreiterten Fuß 28. Die beiden weiteren Stützen 11 und 12 sind vorteilhaft als Stützflügel ausgebildet und über Böckchen 34 und 35 mit dem Kopfstück 20 und dem Verriegelungsstück 21 verbunden. Diese seitlich angebrachten Böckchen 34 und 35 für jeden der beiden Stützflügel 11 und 12 sind als Schwenkböckchen mit vertikalen Schwenkachsen 36 oder entsprechenden beiderseitigen Schwenkbolzen ausgebildet. Wie insbesondere Fig. 6 verdeutlicht, verlaufen die Stützflügel 11 und 12 in gespreizter Betriebsstellung, bezogen auf die beschriebene Rollenlagerung bzw. die vertikale Rollenebene, sternartig nach außen. Die Flügelstellung kann aber universell den räumlichen Gegebenheiten im Kabelgraben angepaßt werden, beispielsweise so, daß die Stützflügel 11, 12 in einer vertikalen Ebene verlaufen. Zum Transport und zur Lagerhaltung der Vorrichtung können die beiden Stützflügel 11 und 12 um die Schwenkachsen 36 einwärts geschwenkt werden, so daß sie sich in Ebenen befinden, die parallel zu der durch die drei Rollen bestimmte vertikale Mittelebene verlaufen. Aus Stabilitätsgründen und zur Material- und Gewichtsersparnis sind die beiden Stützflügel 11 und 12 aus je zwei dreieckigen oder trapezförmigen Rahmen 37 und 41 ausgebildet. Der obere Rahmen 37 besteht aus einem vertikalen Stützenstück 38 zwischen den beiden Schwenkböckchen 34 und 35 sowie aus einem waagerechten Ausleger 39 und einer Schrägstrebe 40. Der untere Rahmen 41 ist mit einem vertikalen Stützenstück 42 und einer Schrägstrebe 43 mit dem Ausleger 39 verbunden. Am unteren Ende befindet sich ein verbreitetes Fußstück 44. Die beschriebenen Stützen 10, 11 und 12 bzw. deren Stützenteile können aus Gewichts- und Materialersparnis aus Hohlprofilen oder aber auch aus Gußteilen bestehen.

Das Ausführungsbeispiel gemäß den Fig. 3 bis 6 stellt ein einfaches, leicht zu handhabendes Kabelverlegegerät dar, das sich insbesondere für leichtere zu verlegende Kabel eignet.

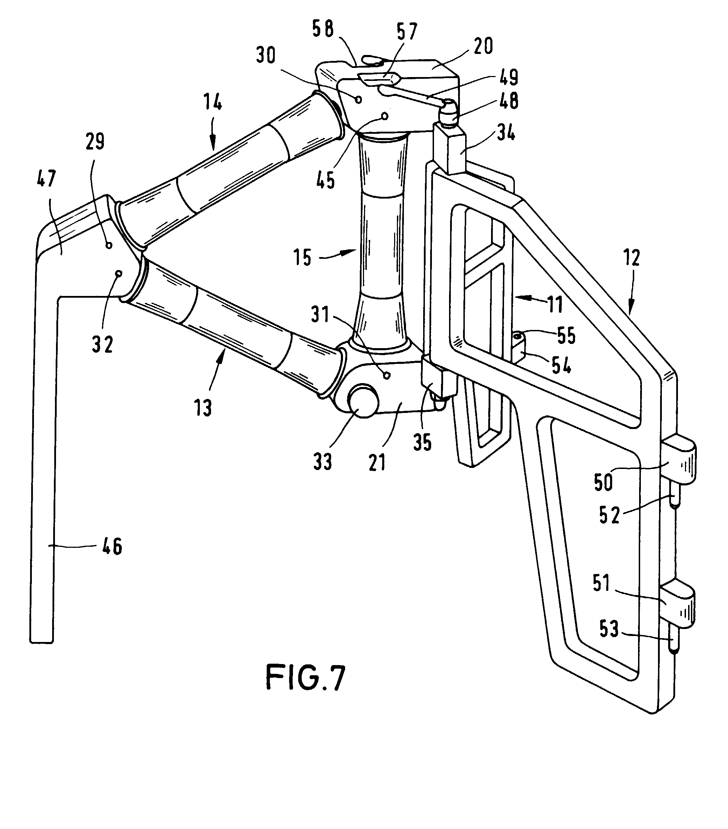

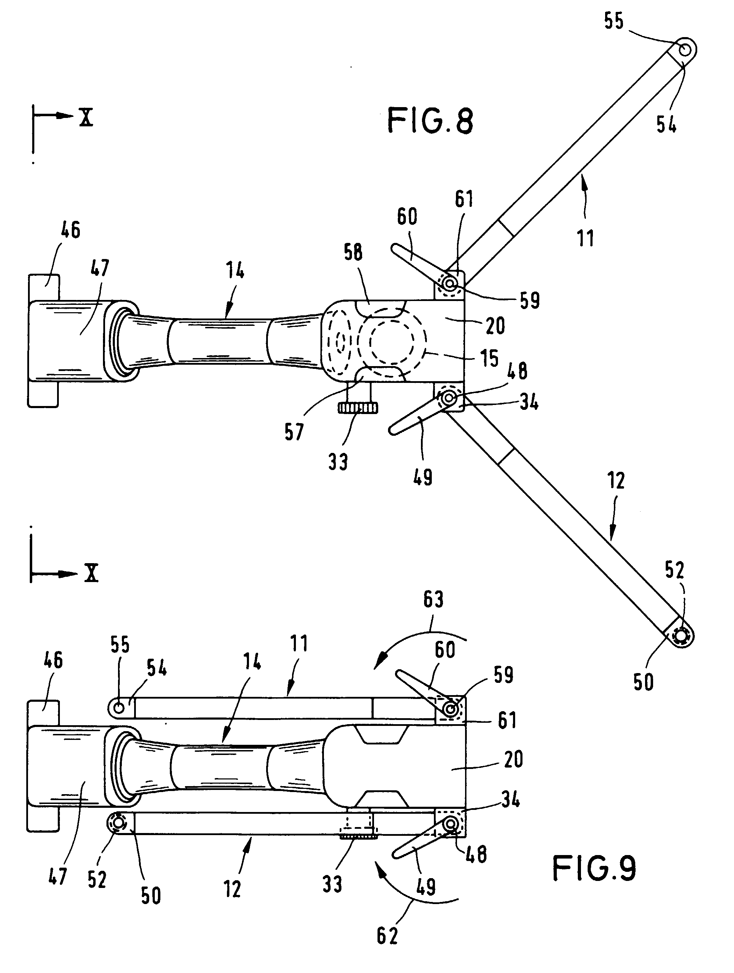

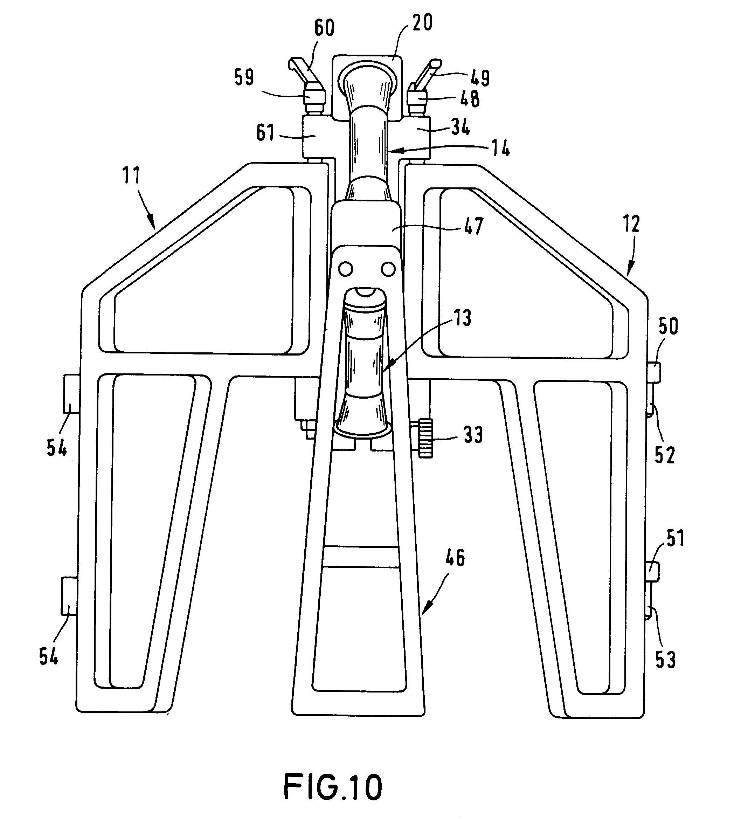

Das weitere Ausführungsbeispiel gemäß den Fig. 7 bis 13 stellt ein besonders stabiles Kabelverlegegerät dar, welches höchsten Stabilitätsansprüchen gerecht wird und auch zum Verlegen schwerer und sehr langer Kabel, insbesondere auch für kurvenreiche Kabelgräben geeignet ist. Soweit die Einzelteile mit denen des Ausführungsbeispiels nach den Fig. 3 bis 6 übereinstimmen oder in gleicher Weise wirken, sind die gleichen Bezugszeichen, wie in den Fig. 3 bis 6 verwendet worden, so daß für das Ausführungsbeispiel nach den Fig. 7 bis 13 die gleiche Beschreibung gilt. Bei diesem Ausführungsbeispiel ist aber auch die eine Stütze 46 in Form eines stabilen und verstärkten Rahmens ausgebildet, wie insbesondere Fig. 10 verdeutlicht. Die Stütze 46 kann einteilig mit einem Kopfteil 47 ausgebildet werden. Die beiden Stützflügel 11 und 12 sind bei diesem Ausführungsbeispiel mittels Feststellschrauben 48 und Festellhebeln 49 in Betriebsstellung gemäß Fig. 8 oder in jeder anderen auswärts geschwenkten Stellung oder in zusammengeklappter Stellung gemäß Fig. 9 feststellbar. Das Einwärtsschwenken der Stützflügel 11 und 12 in die Transport- und Lagerstellung gemäß Fig. 9 erfolgt in Richtung der Pfeile 62 und 63. Im oberen Teil des Kopfstückes 20 sind vorteilhafterweise muldenförmige Aussparungen 57 und 58 vorgesehen, in welche die Enden der Feststellhebel 49 eingeschwenkt werden können. Die Stützen 10, 11, 12 und 46, insbesondere aber die Stützflügel 11 und 12 weisen an den Außenseiten mit Abstand übereinander befindliche Böckchen 50 und 51 mit vertikal nach unten ragenden Verbindungszapfen 52 und 53 bzw. abwechselnd Böckchen 54 mit vertikalen Bohrungen 55 auf. Auf diese Weise ist es möglich, wie insbesondere aus Fig. 1 zu ersehen ist, mehrere benachbarte Vorrichtungen zusammenzustecken, und zwar insbesondere an besonders schwierigen Verlegungsstellen, so daß auf diese Weise eine noch größere Stabilität erzielt wird. Fig. 8 zeigt noch eine Feststellschraube 59, einen Feststellhebel 60 und ein Schwenkböckchen 61 für den Stützflügel 11, die den Teilen 34, 48 und 49 für den Stützflügel 12 entsprechen.

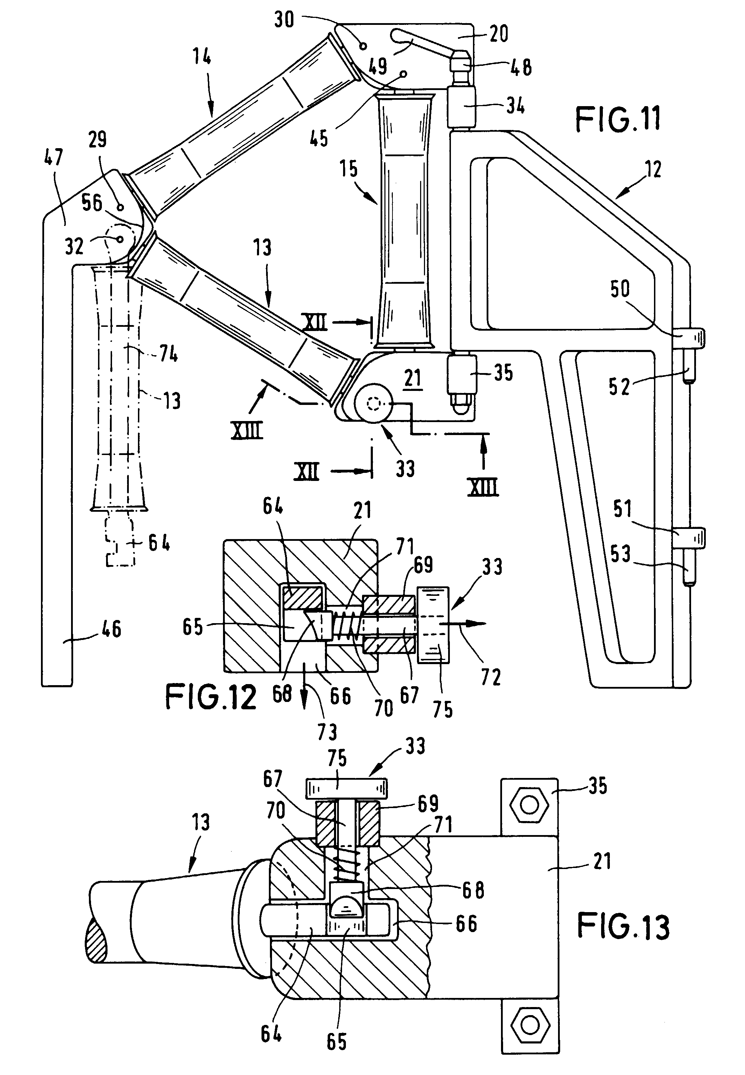

Die Fig. 11 bis 13 zeigen weitere Konstruktionsdetails, die auch bei dem Ausführungsbeispiel gemäß den Fig. 3 bis 6 vorhanden bzw. anwendbar sind. So ist das Kopfteil 47 im Schwenkbereich des linken Endes der Rolle 13 mit einer Rundung 56 versehen, die zweckmäßigerweise auch an dem Verbindungsstück 22 (Fig. 3) vorgesehen ist. Die Fig. 12 und 13 zeigen in den entsprechenden Schnittführungen ein vorteilhaftes Ausführungsbeispiel für die Schnellverriegelung 33. Danach besitzt die untere Rolle 13 eine vorstehende Verriegelungsklaue 64 mit einer Ausnehmung 65, welche in Fig. 11 in ausgeklappter Stellung strichpunktiert dargestellt ist und mit der Rollenachse 74 so verbunden ist, daß die Verriegelungsklaue 64 mit der Ausnehmung 65 aus der Rolle 13 herausragt. In dem Verriegelungsstück 21 ist ein der Breite der Verriegelungsklaue 64 angepaßter, nach unten öffnender Schlitz 66 vorgesehen. Durch eine seitliche Bohrung 71 ist ein handbetätigbares Verriegelungsstück 68 mit einer vorderseitigen klinkenartigen Schrägfläche vorgesehen. Dieses Verriegelungsstück 68 greift in Betriebsstellung der Rolle 13 gemäß Fig. 11 in die Ausnehmung 65 der Verriegelungsklaue 64 ein. Eine zweckmäßige und leicht zu handhabende Vorrichtung ergibt sich dadurch, daß das Verriegelungsstück 68 am inneren Ende eines Bolzens 67 befestigt ist, welcher in einer koaxial mit der Bohrung 71 angeschraubten Führungshülse 69 geführt und am äußeren Ende mit einem Zugknopf 75 versehen ist. Zwischen dem Verriegelungsstück 68 und der Führungshülse 69 ist eine Druckfeder 70 eingesetzt, die dafür sorgt, daß das Verriegelungstück 68 bei Nichtbetätigung des Zugknopfes 75 immer selbständig in die Verriegelungsstellung geht. Bei Betätigen des Zugknopfes in Richtung des Pfeiles 72 wird die Verriegelungsklaue 64 freigegeben und kann in Richtung des Pfeiles 73 nach unten fallen, so daß die Rolle 13 in die vertikale Öffnungsstellung schwenken und, wie oben bereits beschrieben, das aufliegende Kabel herabfallen kann. Zum Wiederverriegeln der Rolle 13 ist es dann nur erforderlich, die Rolle zurückzuschwenken. Die Verriegelungsklaue 64 trifft dann mit der oberen Kante auf die Schrägfläche des Verriegelungsstücks 68 und drückt dieses zurück bis das Verriegelungsstück 68 unter dem Druck der Druckfeder 70 wieder in die Ausnehmung 65 eingreifen kann.

Kabelverlegegeräte sind in der Praxis nicht nur allen Witterungsbedingungen ausgesetzt, sondern auch dem rauhen Baustellenbetrieb. Um diesen Bedingungen Rechnung zu tragen, werden vorteilhafterweise alle Vorrichtungsteile aus korrosionsgeschütztem Material, vorzugsweise aus Leichtmetall, hergestellt.

## Patentansprüche

1. Vorrichtung zum Verlegen von Kabeln (2) in nach oben offene Kabelgräben (3), mit einem Gestell (9) und einer drehbar gelagerten Rolle (13) zur Aufnahme und zum Transport des Kabels (2), wobei die Rolle (13) an dem einen Ende an dem Gestell (9) gehalten ist, und daß andere Ende der Rolle (13) mit einer Schneilverriegelung (33) derart mit dem Gestell (9) verbunden ist, daß das aufliegende Kabel (2) nach Öffnen der Schnellverriegelung (33) unter der Schwerkraft in den Kabelgraben (3) fallen kann,
**dadurch gekennzeichnet**,
daß neben dem einen Ende der Rolle (13) im Bereich der Schnellverriegelung (33) eine weitere Rolle (15) mit einer vertikalen feststehenden Drehachse angeordnet ist.

2. Vorrichtung nach Anspruch 1,
**dadurch gekennzeichnet**,
daß das eine Ende der Rolle (13) in einem Schwenklager mit einem waagerechten Schwenkbolzen (32) gehalten ist.

3. Vorrichtung nach Anspruch 1,
**dadurch gekennzeichnet**,
daß eine dritte Rolle (14) mit einer feststehenden Drehachse derart angeordnet ist, daß die drei Rollen (13, 14, 15) miteinander ein gleichschenkliges Dreieck bilden und die untere Rolle (13) in Betriebsstellung nach der Schnellverriegelung (33) hin entsprechend geneigt ist.

4. Vorrichtung nach Anspruch 3,
**dadurch gekennzeichnet**,
daß die untere Rolle (13) einerseits über die Schnellverriegelung (33) mit einem Verriegelungsstück (21) und andererseits mittels des Schwenkbolzens (32) mit einem Verbindungsstück (22), die vertikale Rolle (15) mittels Festbolzen (31, 45) einerseits mit dem Verriegelungsstück (21) und andererseits mit einem Kopfstück (20) und die dritte Rolle (14) mittels Festbolzen (29, 30) mit dem Verbindungsstück (22) und dem Kopf stück (20) verbunden sind.

5. Vorrichtung nach Anspruch 4,
**dadurch gekennzeichnet**,
daß die Rollen (13, 14, 15) ein mittleres zylindrisches Teil (23) und zwei seitliche konische Teile (24, 25) mit Erweiterung nach außen hin aufweisen.

6. Vorrichtung nach einem der Ansprüche 3 bis 5,
**dadurch gekennzeichnet**,
daß die Rollen (13, 14, 15) unter Zwischenschaltung staub- und schmutzgeschützter Kugellager auf feststehenden Achsen oder Achsstutzen gelagert sind.

7. Vorrichtung nach einem der vorhergehenden Ansprüche,
**dadurch gekennzeichnet**,
daß das Gestell (9) drei Stützen (10, 11, 12; 46) aufweist.

8. Vorrichtung nach Anspruch 7,
**dadurch gekennzeichnet**,
daß die eine Stütze (10) am oberen Ende mit dem Verbindungsstück (22) oder einem Kopf stück (47) und die beiden weiteren Stützen (11, 12) über Böckchen (34, 35) mit dem Kopfstück (20) und dem Verriegelungsstück (21) verbunden sind.

9. Vorrichtung nach Anspruch 8,
**dadurch gekennzeichnet**,
daß die Böckchen (34, 35) als Schwenkböckchen mit vertikalen Schwenkachsen (36) oder Schwenkbolzen für die Stützen (11, 12) ausgebildet sind.

10. Vorrichtung nach Anspruch 9,
**dadurch gekennzeichnet**,
daß die beiden Stützen (11, 12) als Stützflügel ausgebildet sind, welche beliebig bis in eine gespreizte Betriebsstellung nach außen und einwärts schwenkbar sind, so daß sie etwa parallel zu der durch die drei Rollen bestimmte vertikale Mittelebene verlaufen.

11. Vorrichtung nach Anspruch 10,
**dadurch gekennzeichnet**,
daß die Stützflügel (11, 12) aus zwei dreieckigen oder trapezförmigen Rahmen (37, 41) gebildet sind.

12. Vorrichtung nach Anspruch 10 oder 11,
**dadurch gekennzeichnet**,
daß die Stützflügel (11, 12) mittels Feststellschrauben (48) und Feststellhebeln (49) in jeder wahlweisen gespreizten Betriebsstellung und in zusammengeklappter Stellung feststellbar sind.

13. Vorrichtung nach einem der Ansprüche 7 bis 12,
**dadurch gekennzeichnet,**
daß die Stützen (10, 11, 12; 46) auf den Außenseiten Böckchen (50, 51) mit Verbindungszapfen (52, 53) und/oder Böckchen (54) mit Bohrungen (55) aufweisen.

14. Vorrichtung nach einem der vorhergehenden Ansprüche,
**dadurch gekennzeichnet,**
daß die Schnellverriegelung (33) für die untere Rolle (13) eine Verriegelungsklaue (64) mit einer Ausnehmung (65) aufweist, welche mit der Rollenachse (74) verbunden ist, daß in dem Verriegelungsstück (21) ein der Breite der Verriegelungsklaue (64) angepaßter, nach unten öffnender Schlitz (66) vorgesehen ist und daß durch eine seitliche Bohrung (71) ein handbetätigbares Verriegelungsstück (68) in die Ausnehmung (65) der Verriegelungsklaue (64) eingreift

15. Vorrichtung nach Anspruch 14,
**dadurch gekennzeichnet**,
daß das Verriegelungsstück (68) am inneren Ende eines Bolzens (67) befestigt ist, welcher in einer koaxial mit der Bohrung (71) angeschraubten Führungshülse (69) geführt und am äußeren Ende mit einem Zugknopf (75) versehen ist, und daß zwischen dem Verriegelungsstück (68) und der Führungshülse (69) eine Druckfeder (70) eingesetzt ist.

16. Vorrichtung nach einem der vorhergehenden Ansprüche,
**dadurch gekennzeichnet**,
daß alle Vorrichtungsteile aus korrosionsgeschütztem Material, vorzugsweise aus Leichtmetall bestehen.

## Claims

1. Apparatus for laying cables (2) into upwardly open cable ditches (3) comprising a frame (9) and a rotatably supported roller (13) for receiving and transporting the cable (2), said roller (13) being held by one of its ends to the frame (9) and the other end of the roller (13) being linked by a quick-connect/disconnect mechanism (33) to the frame (9) such that upon opening the quick-connect/disconnect mechanism (33) the salient cable (2) can drop by gravity into the cable ditch (3), characterized in that next to one end of the roller (13), within the zone of the quick-connect/disconnect mechanism (33), a further roller (15) with a fixed vertical axis of rotation is provided.

2. Apparatus according to claim 1, characterized in that said one end of the roller (13) is supported in a pivot bearing with a horizontal pivot pin (32).

3. Apparatus according to claim 1, characterized in that a third roller (14) with a fixed axis of rotation is arranged such that the three rollers (13, 14, 15) jointly form an equilateral triangle and the lower roller (13) in the operational position is correspondingly inclined towards the quick-connect/disconnect mechanism (33).

4. Apparatus according to claim 3, characterized in that the lower roller (13) is linked on one hand by means of the quick-connect/disconnect mechanism (33) to a locking member (21) and on the other hand by means of a pivot pin (32) to a connector (22), said vertical roller (15) is linked by means of fixed pins (31, 45) on the one hand to the locking member (21) and on the other hand to a head piece (20), and the third roller (14) is linked by fixed pins (29, 30) to the connector (22) and the head piece (20).

5. Apparatus according to claim 4, characterized in that the rollers (13, 14, 15) comprise a central cylindrical segment (23) and two lateral outward-flaring conical segments (24, 25).

6. Apparatus according to any one of the claims 3 to 5, characterized in that the rollers (13, 14, 15) are supported through interposed dust and dirt-protected ball bearings on fixed axles or axle stubs.

7. Apparatus according to any one of the preceding claims, characterized in that the frame (9) comprises three trusses (10, 11, 12; 46).

8. Apparatus according to claim 7, characterized in that one truss (10) is linked at an upper end thereof to the connector (22) or a head piece (47) and the remaining two trusses (11, 12) are linked by small blocks (34, 35) to the head piece (20) and the locking member (21).

9. Apparatus according to claim 8, characterized in that the small blocks (34, 35) are performed as small pivot blocks having vertical pivot axles (36) or pivot pins for the trusses (11, 12).

10. Apparatus according to claim 9, characterized in that said two trusses (11, 12) are performed as supporting wings which can be arbitrarily outwardly and inwardly pivoted to a spread-apart operational position such as to extend approximately parallel to the vertical plane defined by the three rollers.

11. Apparatus according to claim 10, characterized in that the supporting wings (11, 12) are formed of two triangular or trapezoidal frames (37, 41).

12. Apparatus according to claim 10 or 11, characterized in that the supporting wings (11, 12) can be locked by means of locking screws (48) and locking levers (49) in each one of optional spread-apart operational positions and in a folded position.

13. Apparatus according to any one of the claims 7 to 12, characterized in that the trusses (10, 11, 12; 46) on the outsides thereof carry small blocks (50, 51) with connecting pins (52, 53) and/or small blocks (54) with bores (55).

14. Apparatus according to any one of the preceding claims, characterized in that the quick-connect/disconnect mechanism (33) for the lower roller (13) comprises a locking claw (64) having a recess (65) and being linked to the roller axle (74), that in the locking member (21) a downwardly opening slot (66) is provided corresponding in width to the width of the locking claw (64), and that a manually actuated locking piece (68) enters said recess (65) of the locking claw (64) through a lateral bore (71).

15. Apparatus according to claim 14, characterized in that the locking piece (68) is affixed to the inner end of a bolt (67) guided in a guide sleeve (69) which is screw-fixed coaxially to the bore (71) and carries a pull knob (75) at an outer end thereof, and that a compression spring (70) is interposed between the locking piece (68) and the guide sleeve (69).

16. Apparatus according to any one of the preceding claims, characterized in that all the components of the apparatus consist of an anticorrosive material and preferably of light metal.

## Revendications

1. Dispositif de pose de câbles (2) dans des tranchées (3) pour câbles ouvertes vers le haut, comportant un bâti (9) et un rouleau (13), porté avec liberté de rotation, pour la réception et le transport du câble (2), dans lequel le rouleau est maintenu sur le bâti (9) à une première extrémité et l'autre extrémité du rouleau (13) est reliée au bâti (9) avec un verrouillage rapide (33) de façon qu'après ouverture du verrouillage rapide (33), le câble (2) qui y repose puisse tomber dans la tranchée (3) sous l'action de la pesanteur,
caractérisé
par le fait qu'à côté de la première extrémité du rouleau (13) qui se trouve dans la zone du verrouillage rapide (33) est disposé un autre rouleau (15) à axe de rotation vertical fixe.

2. Dispositif selon la revendication 1,
caractérisé
par le fait que la première extrémité du rouleau (13) est tenue dans une portée pivotante à goupille de pivotement horizontale (32).

3. Dispositif selon la revendication t,
caractérisé
par le fait qu'un troisième rouleau (14) à axe de rotation fixe est disposé de façon que les trois rouleaux (13, 14, 15) forment entre eux un triangle isocèle et que le rouleau inférieur (13) soit, en position de service, incliné de façon appropriée vers le verrouillage rapide (33).

4. Dispositif selon la revendication 3,
caractérisé
par le fait que le rouleau inférieur (13) est relié, d'une part par l'intermédiaire du verrouillage rapide (33), avec un élément de verrouillage (21) et d'autre part, au moyen de la goupille de pivotement (32), avec un élément de liaison (22), que le rouleau vertical (15) est relié, au moyen de goupilles de fixation (31, 45), d'une part avec l'élément de verrouillage (21) et d'autre part avec un élément de tête (20), et que le troisième rouleau (14) est relié, au moyen de goupilles de fixation (29, 30), avec l'élément de liaison (22) et avec l'élément de tête (20).

5. Dispositif selon la revendication 4,
caractérisé
par le fait que les rouleaux (13, 14, 15) présentent une partie médiane cylindrique (23) et deux parties latérales coniques (24, 25) avec élargissement vers l'extérieur.

6. Dispositif selon l'une des revendications 3 à 5,
caractérisé é
par le fait que les rouleaux (13, 14, 15) sont portés sur des axes fixes ou des manchons d'axe fixes, avec interposition de paliers à billes étanches à l'égard de la poussière et de la saleté.

7. Dispositif selon l'une des revendications précédentes,
caractérisé
par le fait que le bâti (9) présente trois appuis (10, 11, 12; 36).

8. Dispositif selon la revendication 7,
caractérisé
par le fait que le premier appui (10) est relié, à l'extrémité supérieure, avec l'élément de liaison (22) ou un élément de tête (47) et que les deux autres appuis (11, 12) sont reliés, par l'intermédiaire d'oreilles (34, 35), avec l'élément de tête (20) et l'élément de verrouillage (21).

9. Dispositif selon la revendication 8,
caractérisé
par le fait que les oreilles (34, 35) sont conçues sous forme d'oreilles pivotantes à axes de pivotement verticaux (36) ou à goupilles de pivotement pour les appuis (11, 12).

10. Dispositif selon la revendication 9,
caractérisé
par le fait que les deux appuis (11, 12) sont conçus sous forme de battants d'appui qui peuvent à volonté pivoter vers l'extérieur jusqu'à une position de service en écartement et vers l'intérieur de façon à être à peu près orientés parallèlement au plan vertical médian défini par les trois rouleaux.

11. Dispositif selon la revendication 10,
caractérisé
par le fait que les battants d'appui (11, 12) sont formés de deux cadres triangulaires ou trapézoïdaux (37, 41).

12. Dispositif selon la revendication 10 ou 11,
caractérisé
par le fait que les battants d'appui (11, 12) peuvent être bloqués, au moyen de vis de blocage (48) et de leviers de blocage (49), dans toute position de service d'écartement quelconque et en position repliée.

13. Dispositif selon l'une des revendications 7 à 12,
caractérisé
par le fait que les appuis (10, 11, 12; 46) présentent, sur les faces extérieures, des oreilles (50, 51) avec tenons de liaison (52, 53) et/ou des oreilles (54) avec perçages (55).

14. Dispositif selon l'une des revendications précédentes,
caractérisé
par le fait que le verrouillage rapide (33) pour le rouleau inférieur (13) présente un crochet de verrouillage (64), avec un évidement (65), qui est relié à l'axe (74) du rouleau, que, dans l'élément de verrouillage (21), est prévue une fente (66) adaptée à la largeur du crochet de verrouillage (64) et s'ouvrant vers le bas et que, par un perçage latéral (71), un élément de verrouillage (68), manoeuvrable à la main, vient en prise dans l'évidement (65) du crochet de verrouillage (64).

15. Dispositif selon la revendication 14,
caractérisé
par le fait que l'élément de verrouillage (68) est fixé à l'extrémité intérieure d'une tige (67) qui est guidée dans une douille de guidage (69) vissée coaxialement au perçage (71) et, à l'extrémité extérieure, est muni d'un bouton de tirage (75) et qu'entre l'élément de verrouillage (68) et la douille de guidage (61) est inséré un ressort de compression (70).

16. Dispositif selon l'une des revendications précédentes,
caractérisé
par le fait que toutes les pièces du dispositif sont constituées d'un matériau protégé contre la corrosion, de préférence en métal léger.
